# EUROPEAN PATENT SPECIFICATION

(11) **EP 2 646 588 B1**
(45) Date of publication and mention of the grant of the patent: **16.02.2022**
(21) Application number: 11807755.1
(22) Date of filing: 02.12.2011
(51) Int. Cl.: C22C 37/06, C22C 37/10, F16D 65/12

(54) **BRAKE DISC FOR A DISC BRAKE**
BREMSSCHEIBE FÜR SCHEIBENBREMSE
DISQUE DE FREIN POUR FREIN À DISQUE

(30) Priority: 02.12.2010 IT BS20100196
(43) Date of publication of application: 09.10.2013
(73) Proprietor: Brembo S.p.A., 24035 Curno (Bergamo) (IT)
(72) Inventor: OBERTI, Leone, I-24035 Curno, BERGAMO (IT); CASALI, Costantino, I-24035 Curno, BERGAMO (IT)
(74) Representative: Mitola, Marco
(86) International application number: PCT/IB2011/055427
(87) International publication number: WO 2012/073220

(56) References cited:
- EP-A2- 0 693 336
- CN-A- 101 705 422
- CN-B- 101 418 413
- JP-A- 3 232 943
- JP-A- 7 305 138
- KR-A- 20070 013 730
- US-A- 4 948 437
- US-A- 5 122 197
- US-A- 5 894 010

## Description

The present invention relates to a brake disc for a disc brake having a braking band made in cast iron.

The present invention finds particular but not exclusive application in the automobile sector. In particular, the present invention finds application in high performance vehicles and also on heavy goods vehicles having the need to dissipate, through the brake disc, large quantities of kinetic energy and therefore, subject to elevated mechanical and thermal stresses.

As is known, in the automobile sector, and in particular for high performance vehicles, the need is felt to make brake discs in cast iron which can resist mechanical and thermal stresses of high intensity.

Such stresses cause high temperatures to be reached on the braking bands which may lead to reductions in braking performance and even to the formation of cracks on the braking band.

The need is also felt to make brake discs which have a high resistance to corrosion so as to increase their duration.

The brake disc solutions of the prior art envisage the use of cast irons. The cast irons used in the art for the production of brake discs are for example described in JP 7305138 A and in KR 20030075972 A.

In the art types of cast iron which are suitable for using for the realisation of brake discs able to simultaneously ensure high performance in terms of mechanical resistance, thermal resistance and corrosion are not known of.

The purpose of the present invention is to make a brake disc which overcomes the drawbacks mentioned with reference to the prior art, that is which guarantees high braking performance in terms of mechanical, thermal resistance and resistance to corrosion, in demanding working conditions, without incurring in detectable cracking phenomena.

Further characteristics and advantages of the present invention will be more clearly comprehensible from the description given below of its preferred and non-limiting embodiments.

According to one embodiment, the brake disc according to the present invention comprises a braking band made in a cast iron comprising carbon, silicon, manganese, molybdenum, chromium. The braking band may be of any type, shape and size, it may for example be fitted with cooling holes or grooves and is preferably of the self-ventilating type. Said braking band, in the known manner, may be associated to a bell, of any type, material, shape and size, so as to form a brake disc associable for example to a wheel. The bell may be made of the same material as the braking band or in different material. Preferably, the braking band and the bell are made in different material and are coupled by suitable coupling means, such as bushes or pins, or by means of simultaneous melting of the bell and the braking band. Alternatively, the braking band and the bell are made in the same material.

The braking band is made in cast iron.

Advantageously, the cast iron used to make the braking band comprises carbon, silicon, manganese, molybdenum, chromium.

According to the invention, the percentage in weight of carbon C% is from 3.70 to 3.85%. The percentage in weight of silicon Si% is from 1.30 to 1.40%. . The percentage in weight of manganese Mn% is from 0.60 to 0.70%. In addition, the percentage in weight of molybdenum Mo% is less than 0.10% and the percentage in weight of chromium Cr% is from 0.10 to 0.30%. The cast iron of the braking band has a percentage in weight of carbon equivalent C_{eq} which is from 4.13 to 4.38, where C_{eq} = C%+ Si%/3. Such formula for calculating C_{eq} is normally used in the field of metallurgy.

According to one embodiment, the percentage in weight of carbon is from 3.70 to 3.80%

According to one embodiment, the percentage in weight of manganese is approximately 0.66%.

According to one embodiment, the percentage in weight of molybdenum is less than 0.05%,

According to one embodiment, the percentage in weight of chromium is approximately 0.20%.

According to one embodiment,the cast iron comprises copper in a percentage in weight from 0.20 to 0.35%.

Preferably, the matrix of said cast iron is of the pearlitic, lamellar type. Such type of matrix behaves so as to oppose the formation and subsequent propagation of cracks due, for example, to a combined effect of mechanical and/or thermal stresses.

Preferably, the cast iron according to the invention comprises a percentage in weight of ferrite of less than 5%.

Preferably, the cast iron according to the invention comprises a percentage in weight of cementite and free carbons of less than 1%.

The braking band according to the present invention makes it possible to contain and in part overcome the drawbacks presented in relation to the prior art. In particular such braking band makes for a considerable reduction in the formation of thermal-mechanical cracks compared to the discs of the prior art.

In addition the large quantity of graphite gives the cast iron and the disc improved heat conductivity which enables elevated heat exchange during the braking shock.

**The** risk of formation of thermal stress cracks is thereby significantly reduced even in conditions of heavy use of the braking system.

In addition, the braking band of the present invention has a high damping capacity which helps to increase resistance to the formation and propagation of cracks.

Thanks to the percentages of silicon provided for in the cast iron which the present invention relates to, a graphitising effect is produced, avoiding the formation of cementite and carbons.

In particular, the cast iron used to produce the braking band has a percentage of carbon equivalent Ceq of 4.13 to 4.38.

Such C_{eq} value is contained compared to the percentages of carbon equivalent of the cast irons of the prior art. It should be noted that such a limited value is obtained by means of a relatively high percentage of carbon, of 3.70 to 3.85 and, at the same time a limited percentage of silicon, of 1.30 to 1.40.

The limited C_{eq} value ensures that a material with a good graphitising effect is obtained, at the same time avoiding the formation of cementite and carbons.

This aspect is particularly advantageous given that the cementite and the carbons constitute particularly fragile inclusions which could easily trigger the formation and propagation of cracks.

At the same time, the graphitising effect is obtained with a particularly low percentage of silicon. The low percentage of silicon improves the fatigue behaviour of the cast iron, and thereby of the braking band, given that silicon is an element which increases the rigidity of the material and thereby its fragility.

At the same time the relatively high percentage of carbon, from 3.70. to 3.85 which would tend to increase the fragility of the material is offset by the low percentage of manganese.

In other words, the combined use of a low percentage of manganese and of a low percentage of silicon offsets the relatively high percentage of carbon.

As a result, with the percentages of carbon, silicon and manganese envisaged by the present invention a low value of carbon equivalent can be achieved, which permits a high graphitisation and good thermal and mechanical resistance. Such advantages are obtained by maintaining a low value of silicon and a relatively high quantity of carbon.

Moreover, the low percentage of manganese and of silicon improves the ductility of the cast iron offsetting the fragility caused by a relatively high percentage of carbon.

From some experimental tests carried out it was seen that the braking band made with a cast iron having the aforesaid percentages of components, has a resistance to breakage by fatigue substantially double that which can be achieved with cast irons of the prior art.

Moreover, the chromium and the molybdenum stabilise the formation of lamellar pearlite in the metal matrix.

Thanks to the present invention brake discs can be designed having high performance geometries and with frequency levels on average lower than the discs of the prior art and therefore improved in terms of driving comfort.

In fact it has been observed that compared to the discs of the prior art the discs according to the present invention show a lowering of the frequencies of over 5%.

The present invention is particularly advantageous for applications to brake discs of high performance vehicles but also to brake discs of heavy goods vehicles which similarly to high performance vehicles needs to dissipate large quantities of kinetic energy and are thereby particularly subject to the formation of cracks as a result of repeated thermal and/or mechanical stresses.

A person skilled in the art may make numerous modifications and variations to the brake discs described above so as to satisfy contingent and specific requirements while remaining within the sphere of protection of the invention as defined by the following claims.

## Claims

1. Brake disc for a disc brake, comprising a braking band made in a cast iron comprising carbon, silicon, manganese, molybdenum, chromium, the cast iron having a composition wherein the percentage
in weight of carbon C% is from 3.70 to 3.85%,
the percentage in weight of silicon Si% is from 1.30 to 1.40%,
the percentage in weight of manganese Mn% is from 0.60 to 0.70%,
the percentage in weight of molybdenum Mo% is less than 0.10%,
the percentage in weight of chromium Cr% is from 0.10 to 0.30%,
wherein the cast iron comprises optionally copper in a percentage in weight from 0.20 to 0.30%, the balance being iron and wherein the percentage in weight of carbon equivalent Ceq is from 4.13 to 4.38 where Ceq = C%+ Si%/3.

2. Brake disc for a disc brake according to claim 1, wherein the percentage in weight of carbon is from 3.70 to 3.80%.

3. Brake disc for a disc brake according to any of the previous claims, wherein the percentage in weight of manganese is equal to approx. 0.66%.

4. Brake disc for a disc brake according to any of the previous claims, wherein the percentage in weight of molybdenum is less than 0.05%.

5. Brake disc for a disc brake according to any of the previous claims, wherein the percentage in weight of chromium is equal to approximately 0.20%.

6. Brake disc for a disc brake according to any of the previous claims, wherein the matrix of said cast iron is of the pearlitic, fine lamellar type.

7. Brake disc for a disc brake according to any of the previous claims, comprising a percentage of ferrite of less than 5%.

## Patentansprüche

1. Bremsscheibe für eine Scheibenbremse, umfassend ein Bremsband, welches aus einem Gusseisen hergestellt ist, welches Kohlenstoff, Silizium, Mangan, Molybdän, Chrom umfasst, wobei das Gusseisen eine Zusammensetzung aufweist, in welcher der Gewichtsanteil von Kohlenstoff C% von 3,70 bis 3,85% beträgt,
der Gewichtsanteil von Silizium Si% von 1,30 bis 1,40% beträgt,
der Gewichtsanteil von Mangan Mn% von 0,60 bis 0,70% beträgt,
der Gewichtsanteil von Molybdän Mo% weniger als 0,10% beträgt,
der Gewichtsanteil von Chrom Cr% von 0,10 bis 0,30% beträgt,
wobei das Gusseisen optional Kupfer in einem Gewichtsanteil von 0,20 bis 0,30% umfasst, wobei der Rest Eisen ist und wobei der Gewichtsanteil von Kohlenstoffäquivalent Ceq von 4,13 bis 4,38 beträgt, wobei Ceq = C% +Si%/3.

2. Bremsscheibe für eine Scheibenbremse nach Anspruch 1, wobei der Gewichtsanteil von Kohlenstoff von 3,70 bis 3,80% beträgt.

3. Bremsscheibe für eine Scheibenbremse nach einem der vorhergehenden Ansprüche, wobei der Gewichtsanteil von Mangan gleich etwa 0,66% ist.

4. Bremsscheibe für eine Scheibenbremse nach einem der vorhergehenden Ansprüche, wobei der Gewichtsanteil von Molybdän weniger als 0,05% beträgt.

5. Bremsscheibe für eine Scheibenbremse nach einem der vorhergehenden Ansprüche, wobei der Gewichtsanteil von Chrom gleich etwa 0,20% ist.

6. Bremsscheibe für eine Scheibenbremse nach einem der vorhergehenden Ansprüche, wobei die Matrix des Gusseines vom perlitischen, feinlaminaren Typ ist.

7. Bremsscheibe für eine Scheibenbremse nach einem der vorhergehenden Ansprüche, umfassend einen Ferritanteil von weniger als 5%.

## Revendications

1. Disque de frein pour frein à disque, comprenant une bande de freinage faite d'une fonte comprenant du carbone, du silicium, du manganèse, du molybdène, du chrome, la fonte ayant une composition dans laquelle le pourcentage en poids de carbone C% est de 3,70 à 3,85 %,
le pourcentage en poids de silicium Si% est de 1,30 à 1,40 %,
le pourcentage en poids de manganèse Mn% est de 0,60 à 0,70 %,
le pourcentage en poids de molybdène Mo% est inférieur à 0,10 %,
le pourcentage en poids de chrome Cr% est de 0,10 à 0,30 %,
et
dans lequel la fonte comprend optionnellement du cuivre en un pourcentage en poids de 0,20 à 0,30 %, le reste étant du fer et dans lequel le pourcentage en poids d'équivalent carbone Céq est de 4,13 à 4,38 où Céq = C%+ Si%/3.

2. Disque de frein pour frein à disque selon la revendication 1, dans lequel le pourcentage en poids de carbone est de 3,70 à 3,80%.

3. Disque de frein pour frein à disque selon l'une quelconque des revendications précédentes, dans lequel le pourcentage en poids de manganèse est égal à approx. 0,66 %.

4. Disque de frein pour frein à disque selon l'une quelconque des revendications précédentes, dans lequel le pourcentage en poids de molybdène est inférieur à 0,05 %.

5. Disque de frein pour frein à disque selon l'une quelconque des revendications précédentes, dans lequel le pourcentage en poids de chrome est égal à approximativement 0,20 %.

6. Disque de frein pour frein à disque selon l'une quelconque des revendications précédentes, dans lequel la matrice de ladite fonte est du type lamellaire fin, perlitique.

7. Disque de frein pour frein à disque selon l'une quelconque des revendications précédentes, comprenant un pourcentage de ferrite inférieur à 5 %.
